(19) Europäisches Patentamt
European Patent Office
Office européen des brevets

(11) Veröffentlichungsnummer: **0 006 122**
**B1**

(12) # EUROPÄISCHE PATENTSCHRIFT

(45) Veröffentlichungstag der Patentschrift: **28.04.82**

(51) Int. Cl.³: **C 08 K 5/34, C 08 L 23/02**

(21) Anmeldenummer: **79101394.9**

(22) Anmeldetag: **08.05.79**

(54) **Verfahren zum Pigmentieren von Hart-PVC und Polyolefinen in der Masse.**

(30) Priorität: **18.05.78 CH 5388/78**

(43) Veröffentlichungstag der Anmeldung:
**09.01.80 Patentblatt 80/1**

(45) Bekanntmachung des Hinweises auf die Patenterteilung:
**28.04.82 Patentblatt 82/17**

(84) Benannte Vertragsstaaten:
**CH DE FR GB IT**

(56) Entgegenhaltungen:
**DE - A - 2 063 714**
**DE - A - 2 139 688**
**DE - B - 1 130 099**

(73) Patentinhaber: **CIBA-GEIGY AG**
**Patentabteilung Postfach**
**CH-4002 Basel (CH)**

(72) Erfinder: **Bäbler, Fridolin, Dr.**
**Nussbaumweg 19**
**CH-4123 Allschwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 122 B1

# Verfahren zum Pigmentieren von Hart-PVC und Polyolefinen in der Masse

Es ist bekannt, dass man das N,N'Dimethylperylen-3,4,9,10-tetracarbonsäurediimid u.a. zum Pigmentieren von Polyolefinen verwenden kann, siehe beispielsweise die DE—AS Nr. 2 504 481. Dieses Pigment ist aber sehr schlecht dispergierbar und daher für den erwähnten Zweck ohne praktisches Interesse.

Andererseits ist in der DE—PS Nr. 1 130 099 beschrieben, dass N,N'-Dialkylperylen-3,4,9,10-tetracarbonsäurediimide mit Alkylresten enthaltend 3—18 C-Atome zur Herstellung fluoreszierender Färbungen in Polystyrol geeignet sind. Im weiteren wird erwähnt, dass diese Farbstoffe keine hohe Lösungsmittelechtheit aufweisen, was ihre praktische Verwendung als Pigmente in der Lack- oder Kunststoffindustrie ausschliesst.

Es wurde nun gefunden, dass überraschenderweise Perylentetracarbonsäurediimide oder deren Gemische der Formel

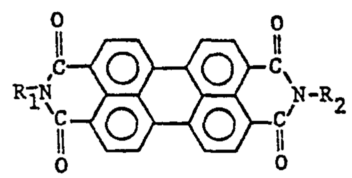

worin $R_1$ einen aliphatischen oder cycloaliphatischen Rest mit mindestens 12 C-Atomen und $R_2$ Wasserstoff, einen aliphatischen oder cycloaliphatischen Rest bedeuten, wobei $R_2$ die gleiche oder eine verschiedene Bedeutung wie $R_1$ hat, sich hervorragend zum Pigmentieren von Polyolefinen und Hart PVC eignen.

Die erfindungsgemäss zu verwendenden Pigmente sind, wie bereits erwähnt, in der DE—PS 1 130 099 beschrieben. Man erhält sie nach bekanntem Verfahren durch Kondensation der Perylen-3,4,9,10-tetracarbonsäure oder ihres Anhydrids mit einem aliphatischen Amin der Formel $R_1NH_2$, worin $R_1$ die oben angegebene Bedeutung hat, vorzugsweise aber einen Alkyl-, Alkoxyalkyl- oder Cycloalkylrest mit 12—24 C-Atomen bedeutet, oder mit einem Gemisch eines Amins der Formel $R_1NH_2$ mit einem solchen der Formel $R_2NH_2$ und gegebenenfalls mit weiteren Aminen der Formel $R_2NH_2$, worin $R_2$ die oben angegebene Bedeutung hat, vorzugsweise aber einen Alkylrest mit 1—24 C-Atomen, einen Alkoxyalkylrest mit 3—24 C-Atomen oder einen Cycloalkylrest mit 5—24 C-Atomen bedeutet.

Als besonders geeignet erwiesen sich Mischungen von Aminen mit $R_1$=Stearyl und $R_2$=verzweigtes Alkyl, Alkoxyalkyl oder Cycloalkyl mit 6—12 C-Atomen.

Von den erfindungsgemäss hergestellten Pigmenten weisen die Mischkondensationspigmente ($R_1 \neq R_2$) gegenüber den reinen Kondensationspigmenten ($R_1$=$R_1$) in der Regel eine noch bessere Ausblühechtheit bei höheren Temperaturen auf.

Als Beispiele von Aminen der Formel $R_1$—$NH_2$ seien genannt:

Laurylamin
Stearylamin
Myristylamin
Cetylamin
3-(n-Dodecyloxy)-n-propylamin-1
das Amin der Formel

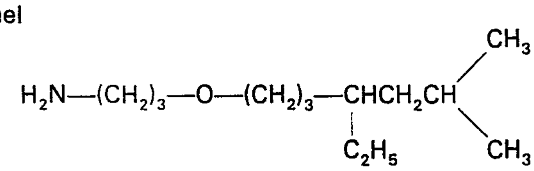

sowie Abietylamin, Di- oder Tetrahydroabietylamin oder Dehydroabietylamin, sowie die Amine der Formel

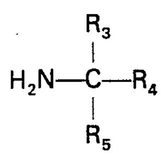

die unter den Handelsnamen Primene 81—R ($R_3$, $R_4$ und $R_5$ mit zusammen 12—14 (C-Atomen) und Primene JM—T ($R_3$, $R_4$ und $R_5$ mit zusammen 18—22 C-Atomen) bekannt sind.

Als Amine der Formel $R_2NH_2$ kommen beispielsweise ausser den oben genannten noch folgende in Betracht:

Ammoniak
Methylamin
Aethylamin
n-Propylamin
Isopropylamin
n-Butylamin
Isobutylamin
tert.-Butylamin
1-Methylpropylamin
n-Pentylamin
n-Hexylamin
1,2-Dimethyl-n-butylamin-1
1-Amino-2-methyl-n-pentan
1-Amino-2-äthyl-hexan
2-Methoxy-n-propylamin-1
3-Isopropoxy-n-propylamin-1
Cyclohexylamin
n-Octylamin
tert.-Octylamin
1-Amino-3-äthyl-5-methylhexan
3-n-Hexoxy-n-propylamin-1
3-Cyclohexoxy-n-propylamin-1
3-(2'-Aethylhexoxy)-n-propylamin-1

Die Umsetzung des Perylentetracarbonsäuredianhydrides mit dem langkettigen Amin erfolgt zweckmässig in Wasser, wässrigem Ammoniak oder wässrigem Methylamin unter Druck oder in einem organischen Lösungs- oder Verdünnungsmittel wie Ligroin, Chinolin, Aethylenglycol, Cellosolve, Aethylcellosolve, Trichlorbenzol, Alkoholen, z.B. Methanol, Aethanol, Propanol-1, Propanol-2, mit oder ohne erhöhten Druck, oder in einem Ueberschuss des Amins mit oder ohne zusätzlichem Lösungsmittel. Zur Herstellung asymmetrischer Diimide enthaltend eine Methylimidgruppe erweist sich N-Methylformamid als besonders geeignet, da es neben seiner Funktion als Lösungsmittel gleichzeitig als Methylamin-abgebende Verbindung wirkt.

Die erhaltenen Pigmente lassen sich durch Filtration isolieren, nach üblichen Methoden trocknen, und aufgrund ihrer ausgezeichneten Dispergierbarkeit ohne weitere Zerkleinerung oder Präparierung direkt in Polyolefine oder Hart PVC einarbeiten.

Als Beispiele für Polyolefine seien Polyäthylen hoher und niederer Dichte (PE—HD) und (PE—LD), Polypropylen und Polyisobutylen erwähnt.

Die Färbung erfolgt nach den üblichen Verfahren, beispielsweise durch Mischen des Pigmentes mit dem Polyolefingranulat oder -pulver und Extrudieren der Mischung zu Fasern, Folien oder Granulaten. Letztere können dann im Spritzgussverfahren zu Gegenständen verformt werden.

Die erhaltenen violett-roten Färbungen zeichnen sich durch gute Echtheitseigenschaften, insbesondere Hitze-Licht- und Ausblühechtheiten aus. Ein besonderer Vorzug der erfindungsgemäss pigmentierten Gegenstände besteht darin, dass sie, insbesondere im Falle von PE—HD, keine erhöhte Neigung zu Verzugs- und Deformationserscheinungen zeigen.

Erfindungsgemäss eingefärbte Profile aus Hart-PVC sind infolge der guten Echtheitseigenschaften für im Bausektor verwendete Bauteile wie Fassadenplatten, Türrahmen, Fensterrahmen und Fensterläden von besonderem Interesse.

In den nachfolgenden Beispielen bedeuten die Teile, sofern nichts anderes angegeben wird, Gewichtsteile, die Prozente Gewichtsprozente, und die Temperaturen sind in Celsiusgraden angegeben. Die Perylen-3,4,9,10-tetracarbonsäure-n,N'-bis-imidpigmente werden als Perylendiimidpigmente bezeichnet.

## Beispiel 1

15,8 Teile Perylen-3,4,9,10-tetracarbonsäuredianhydrid werden unter Rühren bei einer Temperatur von ca. 80—85° in 107,6 Teilen geschmolzenes Stearylamin eingetragen. Nach 10-minütigem Rühren wird die schwer rührbare Masse mit 400 Vol.-Teilen Ligroin (Sdp. 130—150°) verdünnt und weitere 17 Stunden bei Rückflusstemperatur gerührt. Die Suspension wird bei ca. 80° filtriert und der Presskuchen gut mit Ligroin gewaschen. Um alles überschüssige Stearylamin zu entfernen, wird der Presskuchen in 300 Vol.-Teilen Methanol während 1 Stunde bei ca. 40° verrührt, abfiltriert und mit Methanol gewaschen. Nach dem Trocknen erhält man 33,3 Teile des Perylentetracarbonsäure-bis-(stearylimides), welches im Spritzguss in PE—HD eingefärbt, farbstarke violett-rote Färbungen von ausgezeichneten Echtheiten ergibt. Ausserdem zeigen die gefärbten Gegenstände keinen Verzug.

Beispiel 2

19,8 Teile Perylentetracarbonsäuredianhydrid werden unter Rühren bei einer Temperatur von ca. 80° in 56 Teilen geschmolzenes Laurylamin eingetragen. Die sich bildende schwerrührbare Masse wird 10 Minuten bei ca. 80° verrührt, mit 300 Vol-Teilen Ligroin verdünnt und auf Rückflusstemperatur erwärmt. Während 3 Stunden wird bei Rückflusstemperatur das Reaktionswasser langsam aus dem Reaktionsgefäss abdestilliert. Die Reaktionsmasse wird mit weiteren 50 Vol.-Teilen Ligroin verdünnt und weitere 17 Stunden bei Rückflusstemperatur verrührt. Danach wird die Suspension bei ca. 80° abfiltriert, der Presskuchen mit Ligroin, dann mit Methanol aminfrei gewaschen. Nach dem Trocknen erhält man 36 Teile des Perylentetracarbonsäure-bis-(laurylimides), welches bei der Schmelzspinnfärbung von Polypropylenfasern farbstarke violett-rote Färbungen von ausgezeichneten Licht- und textilen Echtheiten ergibt.

Beispiel 3

5,4 Teile Stearylamin, 3,7 Teile Laurylamin, 7,9 Teile Perylentetracarbonsäuredianhydrid werden in 100 Vol.-Teilen N-Methylformamid während 17 Stunden bei 150—160° verrührt. Die Suspension wird bei ca. 40° abfiltriert, der Presskuchen gut mit Methanol gewaschen. Nach dem Trocknen erhält man 15,1 Teile Perylendiimidpigment, welches im Spritzguss in PE—HD eingefärbt farbstarke violett-rote Färbungen mit ausgezeichneten Hitze- und Lichtechtheiten ergibt. Die gefärbten Gegenstände sind ausserdem verzugsfrei.

Beispiel 4

Verfährt man analog wie in Beispiel 3, verwendet aber 0,55 Teile Stearylamin und 7,0 Teile Laurylamin, so erhält man ein Perylendiimidpigment mit ebensoguten Eigenschaften.

Beispiel 5

Verfährt man analog wie in Beispiel 3, verwendet aber als primäre aliphatische Amine 5,4 Teile Stearylamin und 3,3 Vol.-Teile Octylamin, so erhält man ein Perylendiimid-Pigment mit ebensoguten Eigenschaften.

Beispiel 6

Verfährt man analog wie in Beispiel 3, verwendet aber als primäre aliphatische Amine eine Mischung bestehend aus 5,4 Teilen Stearylamin, 2,0 Teilen Laurylamin und 2,0 Vol.-Teilen Hexylamin, so erhält man ein Perylendiimidpigment mit ebensoguten Eigenschaften.

Beispiel 7

7,9 Teile Perylentetracarbonsäuredianhydrid, 7,3 Teile Laurylamin, 0,8 Teil Stearylamin, 150 Vol.-Teile 2%-iger wässriger Ammoniak, 10 Vol.-Teile Isopropanol werden während 24 Stunden im Antoklaven bei 100° verrührt. Die Suspension wird bei ca. 50° abfiltriert und der Presskuchen gut mit Methanol gewaschen. Nach dem Trocknen erhält man 15 Teile Perylendiimidpigment, welches in PE—HD eingefärbt, verzugsfreie, farbstarke Bordeaux-Nuancen mit ausgezeichneten Echtheitseigenschaften ergibt.

Beispiel 8

In einem Autoklaven werden bei 130° 7,9 Teile Perylen-3,4,9,10-tetracarbonsäuredianhydrid, 5,8 Teile Laurylamin, 2,4 Teile Stearylamin in einer 2%-igen wässerigen Methylaminlösung während 8 Stunden verrührt. Die Suspension wird abfiltriert, der Presskuchen gut mit Methanol gewaschen. Nach dem Trocknen erhält man 15,2 Teile Perylendiimidpigment, welches beim Einarbeiten in PE—HD farbstarke, verzugsfreie Bordeaux-Nuancen mit ausgezeichneten Echtheitseigenschaften ergibt.

Beispiel 9

7,9 Teile Perylentetracarbonsäuredianhydrid, 5,4 Teile Stearylamin, 2,8 Vol.-Teile 3-(2'-Aethylhexoxy)-n-propylamin-1 werden in 100 Vol.-Teilen N-Methylformamid während 17 Stunden bei 155—160° verrührt. Die Suspension wird bei ca. 40° abfiltriert, der Presskuchen gut mit Methanol gewaschen. Nach dem Trocknen erhält man 14,8 Teile Perylendiimidpigment, welches im Spritzguss in PE—HD eingefärbt farbstarke violett-rote Färbungen mit ausgezeichneten Hitze- und Lichtechtheiten ergibt. Die gefärbten Gegenstände sind ausserdem verzugsfrei.

Beispiel 10

Verfährt man analog wie in Beispiel 9, verwendet aber 9,7 Teile Stearylamin und 0,6 Vol.-Teile 3-(2'-Aethylhexoxy)-n-propyl-amin-1. So erhält man ein Perylendiimidpigment mit ebensoguten Eigenschaften.

Beispiel 11

7,9 Teile Perylentetracarbonsäuredianhydrid, 7,3 Teile Laurylamin und 0,8 Teile Stearylamin werden in 100 Teilen Wasser bei 120° im Autoklaven verrührt. Die Suspension wird bei ca. 40° abfiltriert

und der Presskuchen gut mit Methanol gewaschen. Nach dem Trocknen erhält man 15,6 Teile Perylendiimidpigment, welches ohne weitere Präparierung nach dem Schmelzspinnverfahren in PO eingefärbt werden kann und farbstarke rotviolette Färbungen mit ausgezeichneten Echtheiten ergibt.

Beispiel 12

7,9 Teile Perylentetracarbonsäuredianhydrid, 9,8 Teile Stearylamin und 0,8 Teile 3-(2'-Aethylhexoxy)-n-propylamin-1 werden in 100 Vol.-Teilen Methanol während 20 Stunden bei 150—160° im Autoklaven verrührt. Die Suspension wird bei Raumtemperatur abfiltriert und der Presskuchen mit Methanol farblos gewaschen. Nach dem Trocknen erhält man 15,8 Teile Perylendiimidpigment, welches im Spritzguss in PE—HD eingefärbt farbstarke violett-rote Färbungen mit ausgezeichneten Hitze- und Lichtechtheiten ergibt. Die gefärbten Gegenstände sind ausserdem verzugsfrei.

Beispiel 13

Eine Mischung von 1,0 Teil des nach Beispiel 9 erhaltenen Perylendiimidpigmentes, 1,0 Teil Antioxydant IRGANOX 1010 (Handelsname der Ciba-Geigy AG) und 1000,0 Teilen Polyäthylen-HD Granulat VESTOLEN A—60—16 (Handelsname der Frima Hüls) wird während 15 Minuten in einer 3 1 Glasflasche auf dem Röhnradmischer vorgemischt. Danach wird die Mischung in zwei Passagen auf einem Einwellenextruder extrudiert, das so erhaltene Granulat auf der Spritzgussmaschine (Allround Aarburg 200) bei 220° zu Platten verspritzt und 5 Minuten bei 180° nachgepresst. Die Pressplatten weisen farbstarke violett-rote Nuancen auf und sind ebenso verzugsfrei wie die Spritzlinge des ungefärbten VESTOLEN A—60—16. Werden die so gefärbten Pressplatten während 24 Stunden in einem Ofen bei 80°C gelagert, so kann kein Ausblühen des Pigmentes aus dem Kunststoff festgestellt werden.

Beispiel 14

Eine Mischung von

| | | | |
|---|---|---|---|
| 92,0 | Teilen | Vinylharz<br>VINNOL H65D | (Wacker, München) |
| 8,0 | Teilen | Vinylcopolymerisat<br>VESTOLIT HIS 7587 | (HUELS) |
| 1,5 | Teilen | Weichmacher<br>REOPLAST 39 | (CIBA-GEIGY AG) |
| 1,4 | Teilen | Stabilisator<br>IRGASTAB BC-10 | " |
| 1,4 | Teilen | Stabilisator<br>IRGASTAB BC—29 | " |
| 0,7 | Teilen | Hilfsstabilisator<br>IRGASTAB CH—300 | " |
| 0,4 | Teilen | Gleitmittel<br>IRGAWAX 370 | " |
| 0,2 | Teilen | Gleitmittel<br>IRGAWAX 360 | " |
| 0,25 | Teilen | Lichtschutzmittel<br>TINUVIN 320 | " |

wird in einem Fluidmischer (Firma Papenmeier K.G., Detmold) durch Verrühren innert ca. 5 Minuten bei einer Geschwindigkeit von ca. 1400 U/Min. hergestellt.

1,5 Teile des so hergestellten Hart-PVC-Compounds und 0,075 Teile eines nach den Beispielen 1—11 hergestellten Perylendiimidpigmentes werden in einem Henschelmischer (Henschelwerke G.M.B.H., Kassel) bei einer Geschwindigkeit von ca. 2000 U/Min. bei Raumtemperatur während ca. 3 Min. vermischt.

Auf einem Mischwalzwerk wird der so pigmentierte Hart-PVC-Compound bei 190° während 6 Minuten mit 25 U/Min. und einer Friktion von 1:1,2 gewalzt und bei 190° während 6 Minuten auf einer Bürkle-Presse zwischen verchromten Stahlplatten in einer Schichtdicke von ca. 1 mm verpresst. Man erhält einen rotviolett gefärbten Pressling, der beim Exponieren eine hervorragende Licht- und Wetterechtheit aufweist.

Beispiel 15

1000 Teile Polypropylengranulat und 10 Teile des nach Beispiel 10 hergestellten Perylendiimidpigmentes werden in einer Mischtrommel intensiv vermischt. Das so behandelte Granulat wird bei 280—285° nach dem Schmelzspinnverfahren versponnen. Man erhält rotviolett gefärbte Fasern mit sehr guten Licht- und textilen Echtheiten.

**Patentansprüche**

1. Verfahren zum Pigmentieren von Polyolefinen und Hart-PVC, dadurch gekennzeichnet, dass man als Pigmente Perylentetracarbonsäurediimide oder deren Gemische der Formel

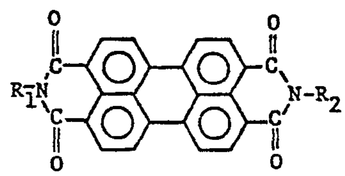

verwendet, worin
$R_1$ einen aliphatischen oder cycloaliphatischen Rest mit mindestens 12 C-Atomen und
$R_2$ Wasserstoff, einen aliphatischen oder cycloaliphatischen Rest bedeuten, wobei $R_2$ die gleiche oder eine verschiedene Bedeutung wie $R_1$ hat.

2. Verfahren gemäss Anspruch 1, dadurch gekennzeichnet, dass man Diimide der angegebenen Formel verwendet, worin
$R_1$ einen Alkyl-, Alkoxyalkyl- oder Cycloalkylrest mit 12—24 C-Atomen und
$R_2$ Wasserstoff, einen Alkylrest mit 1—24 C-Atomen, einen Alkoxyalkylrest mit 3—24 C-Atomen oder einen Cycloalkylrest mit 5—24 C-Atomen bedeuten.

3. Verfahren gemäss Anspruch 1, dadurch gekennzeichnet, dass man Perylentetracarbonsäurediimide oder deren Gemische verwendet, worin
$R_1$ einen Lauryl-, Stearyl- oder Cetylrest bedeutet.

4. Verfahren gemäss Anspruch 1, dadurch gekennzeichnet, dass man Perylentetracarbonsäurediimide oder deren Gemische verwendet, worin
$R_2$ einen Methyl-, 2-Aethylhexyl-, 2-Isopropoxy-n-propyl-, Lauryl-, 3-Aethyl-5-methyl-hexyl-, 3-(2'-Aethylhexoxy)-n-propyl- oder Cyclohexylrest bedeutet.

**Claims**

1. A process for pigmenting polyolefins and rigid polyvinyl chloride which comprises the of perylenetetracarboxylic acid diimide pigments, or mixtures thereof, of the formula

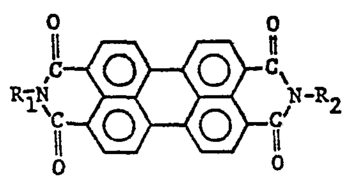

wherein $R_1$ is an aliphatic or cycloaliphatic radical of at least 12 carbon atoms and $R_2$ is hydrogen or an aliphatic or cycloaliphatic radical and has the same meaning as $R_1$ or is different.

2. A process according to claim 1 which comprises the use of diimides of the indicated formula, wherein $R_1$ is an alkyl, alkoxyalkyl or cycloalkyl radical of 12 to 24 carbon atoms and $R_2$ is hydrogen, an alkyl radical of 1 to 24 carbon atoms, an alkoxyalkyl radical of 3 to 24 carbon atoms or a cycloalkyl radical of 5 to 24 carbon atoms.

3. A process according to claim 1 which comprises the use of perylenetetracarboxylic acid diimides, or mixtures thereof, wherein $R_1$ is a lauryl, stearyl or cetyl radical.

4. A process according to claim 1 which comprises the use of perylenetetracarboxylic acid diimides, or mixtures thereof, wherein $R_2$ is a methyl, 2-ethylhexyl, 3-isopropoxy-n-propyl, lauryl, 3-ethyl-5-methylhexyl, 3-(2'-ethylhexoxy)-n-propyl or cyclohexyl radical.

## Revendications

1. Procédé pour pigmenter des polyoléfins et du polychlorure de vinyle dur, procédé caractérisé en ce qu'on utilise, comme pigments, des diimides de l'acide pérylène-tétracarboxylique répondant à la formule:

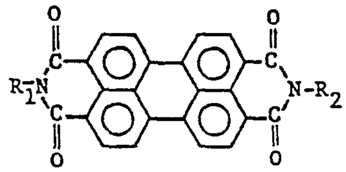

dans laquelle $R_1$ représente un radical aliphatique ou cycloaliphatique contenant au moins 12 atomes de carbone et $R_2$ représente l'hydrogène ou un radical aliphatique ou cyclo-aliphatique et a la même signification que $R_1$ ou une signification différente, ou des mélanges de tels diimides.

2. Procédé selon la revendication 1, caractérisé en ce qu'on utilise des diimides répondant à la formule indiquée dans lesquels $R_1$ représente un radical alkyle, alcoxy-alkyle ou cyclo-alkyle contenant de 12 à 24 atomes de carbone et $R_2$ représente l'hydrogène, un radical alkyle contenant de 1 à 24 atomes de carbone, un radical alcoxy-alkyle contenant de 3 à 24 atomes de carbone ou un radical cycloalkyle contenant de 5 à 24 atomes de carbone.

3. Procédé selon la revendication 1, caractérisé en ce qu'on utilise des diimides de l'acide pérylène-tétracarboxylique dans lesquels $R_1$ représente un radical lauryle, stéaryle ou cétyle, ou des mélanges de tels diimides.

4. Procédé selon la revendication 1, caractérisé en ce qu'on utilise des diimides de l'acide pérylène-tétra-carboxylique dans lesquels $R_2$ représente un radical méthyle, éthyl-2 hexyle, isopropoxy-3 propyle, lauryle, éthyl-3 méthyl-5 hexyle, (éthyl-2 hexyloxy)-3 propyle ou cyclohexyle, ou des mélanges de tels diimides.